# FASCICULE DE BREVET EUROPEEN

(11) **EP 0 890 303 B1**
(45) Date de publication et mention de la délivrance du brevet: **14.06.2000**
(21) Numéro de dépôt: 98112048.8
(22) Date de dépôt: 30.06.1998
(51) Int. Cl.: A01K 1/06

(54) **Perfectionnement aux cornadis.**
Verbessertes Fressgitter
Improved feeding stanchion

(30) Priorité: 09.07.1997 BE 9700593
(43) Date de publication de la demande: 13.01.1999
(73) Titulaire: Vandevelde, Noel, 5620 Florennes (BE)
(72) Inventeur: Vandevelde, Noel, 5620 Florennes (BE)
(74) Mandataire: Vanhamme, Joseph Louis

(56) Documents cités:
- FR-A- 2 597 300
- NL-A- 9 000 107

## Description

La présente invention se rapporte aux dispositifs installés devant une auge et destinés à limiter les mouvements des animaux en train de manger.

De tels dispositifs, appelés cornadis, sont couramment utilisés. On connaît notamment un cornadis, voir e.g. le document NL-A-9 000 107, dans lequel l'immobilisation de l'animal s'obtient par l'abaissement de la tête dans un cadre constitué, d'une part, par une colonne du portique et, d'autre part, par un balancier monté sur pivot et guidé par le longeron supérieur dudit portique. La fourche supérieure du balancier contient un clapet qui entre en contact avec un arrêt fixé sur un tube se trouvant sur le longeron supérieur et qui permet par un pivotement de 90° la position de verrouillage et de déverrouillage. Ce système a l'inconvénient de ne pouvoir empêcher l'étranglement des bêtes.

Cet inconvénient est évité grâce à l'invention par un cornadis dans lequel chaque ouverture contient un balancier formé de deux éléments articulés autour d'un axe de manière à rendre l'élément supérieur indépendant de l'élément inférieur. L'élément inférieur est relié à son extrémité inférieure à une tringle de commande montée pour coulisser le long du longeron inférieur. L'extrémité supérieure de l'élément supérieur est munie d'un clapet coulissant le long d'une tige de commande qui s'étend parallèlement au longeron supérieur.

Sur le support auquel est suspendu le balancier est placée une butée qui empêche tout mouvement du mécanisme lorsque l'élément inférieur se trouve en position inclinée.

Le cornadis conforme à l'invention permet un second déverrouillage sur le longeron inférieur du cornadis. Ce déverrouillage garantit une parfaite sécurité pour les animaux lorsque le mécanisme se trouve dans la position d'ouverture libre-service. De plus, ce cornadis s'avère plus silencieux.

L'invention est exposée dans ce qui suit à l'aide des dessins annexés.

La figure 1 est une vue partielle d'un cornadis conforme à l'invention, en position d'ouverture.

La figure 2 est une figure analogue à celle de la figure 1, le cornadis se trouvant en position de fermeture.

Le portique de stalle représenté partiellement sur les dessins comporte, ainsi qu'il est courant, un longeron supérieur 11, un longeron inférieur 12 et des montants verticaux 13 délimitant des ouvertures 10 pour laisser passage à la tête des animaux. Dans chaque ouverture 10 est prévu un balancier 14 composé de deux éléments 14a et 14b pivotant sur un axe 15. Le balancier 14 est suspendu à un support 16 par l'intermédiaire d'un axe pivot 17, situé à une certaine distance de l'axe 15, au-dessus de celui-ci. Le support 16 est réalisé sous forme d'une barre sensiblement horizontale et solidaire à son extrémité opposée à l'axe pivot 17, du montant 13 qui délimite l'ouverture du côté du balancier, sensiblement au milieu de l'ouverture. Entre le montant 13 et la barre de support 16 sont encore fixées, de part et d'autre de celle-ci, des barres obliques respectivement 25 et 26. La barre oblique inférieure 26 porte une butée 24 qui limite le mouvement de pivotement de l'élément 14a autour de l'axe 15.

L'extrémité inférieure de l'élément 14a du balancier 14 est terminée par une fourche 18 reliée à une tringle de commande 20 longeant le longeron inférieur 12.

L'extrémité supérieure de l'élément 14b est terminée par une fourche 19 pouvant coulisser le long du longeron supérieur 11. Sur la fourche 19 est fixé un clapet 21 reposant sur une tige de commande 22 qui longe le longeron supérieur 11. La tige de commande 22 est montée pour pouvoir pivoter autour de son axe longitudinal et porte un arrêt 23. Le clapet et l'arrêt sont configurés de façon à ce que le clapet puisse passer au-dessus de l'arrêt lorsque la fourche se déplace de gauche à droite, mais est bloquée derrière l'arrêt après l'avoir passé. Pour libérer la fourche il faut alors faire tourner la tige de commande pour dégager l'arrêt de la trajectoire du clapet vue, par exemple d'un angle de 90°.

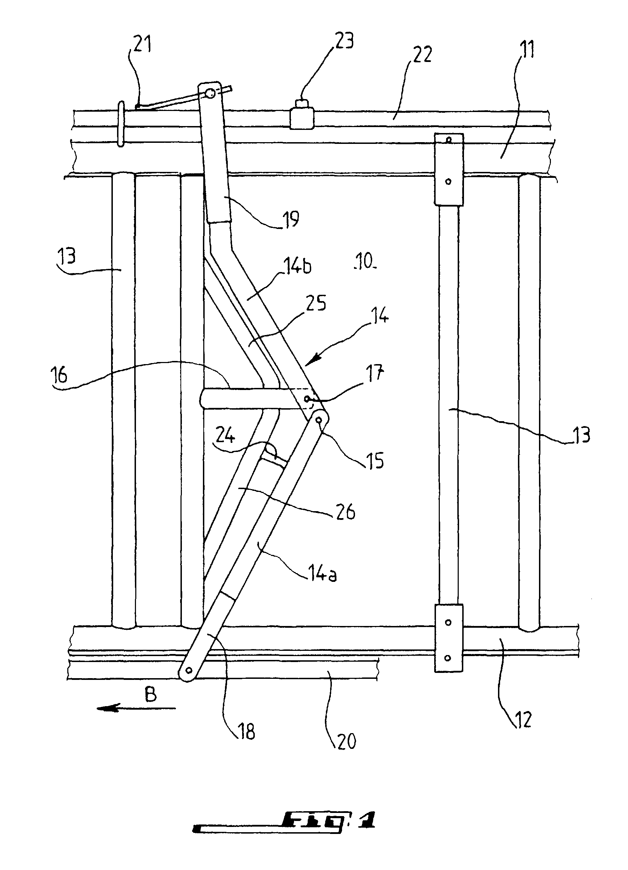

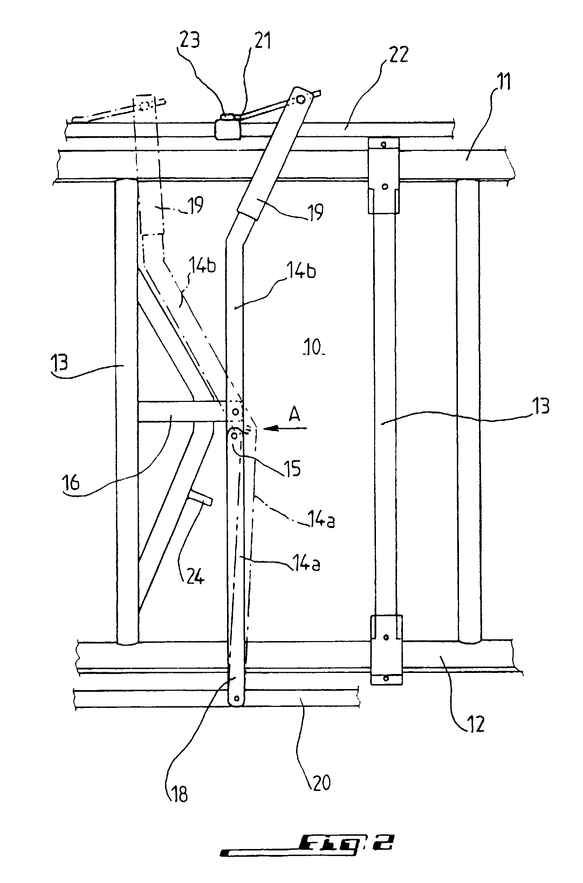

Chaque balancier 14 est susceptible de prendre plusieurs positions:
1) Position basculée de l'élément 14b et position inclinée de l'élément 14a (figure 1) : le cornadis se trouve en position ouverte de libre-service et de sécurité; tant que l'élément 14a est retenu dans cette position, l'élément 14b est bloqué aussi dans sa position inclinée d'ouverture représentée, car tout basculement nécessiterait un mouvement de l'axe 15 vers la gauche, qui cependant est empêché par la butée 24.
2) Position basculée de l'élément 14b et position pratiquement verticale de l'élément 14a (figure 2, pointillé) : le cornadis se trouve en position pour la fermeture; de retenue de la tête de l'animal. Dans cette position tout mouvement d'appui de la tête contre la zone de jonction des éléments 14a, b entrâine le pivotement de l'élément 14b autour de l'axe 17 et le déplacement du clapet 21 vers la droite jusqu'au blocage de celui-ci derrière l'arrêt 21.
3) Position verticale des deux éléments 14a et 14b (figure 2, trait plein) : le clapet 21 est en contact avec l'arrêt 23 et le cornadis se trouve en position fermée.

La tige de commande 22 sert à dégager le clapet 21 de l'arrêt 23 et permet de remettre le balancier dans la position ouverte. Le mouvement d'ouverture est facilité par la tringle inférieure 20 et la butée 24 qui permet en même temps le blocage de tout le mécanisme.

Le cornadis étant en position fermée, il suffit de faire pivoter la tige de commande 22 autour de son axe longitudinal pour libérer le clapet 21 de l'arrêt 23. Ceci permet à l'élément supérieur 14b de pivoter autour de l'axe 15 et à l'animal de sortir la tête.

Pour mettre le cornadis en position de sécurité, il suffit d'effectuer une traction sur la tringle 20 dans le sens de la flèche notée B (figure 1) pour mettre l'élément inférieur 14a en position inclinée.

Par une légère pression indiquée par la flèche A, l'animal peut repousser l'élément inférieur 14a, ce qui met l'élément supérieur 14b en position verticale de fermeture (figure 2). Etant donné que, dans sa position ouverte de libre service, le balancier 14 est bloqué par la tige 20 et la butée 24 le cornadis selon l'invention apporte une solution efficace aux problèmes du bruit et de l'usure rapide inhérents aux cornadis connus.

## Revendications

1. Cornadis constitué d'un portique comprenant des longerons supérieur et inférieur et des montants qui délimitent des ouvertures (10) juxtaposées, le plan de chaque ouverture contenant un balancier suspendu à un support, caractérisé en ce que chaque balancier est constitué de deux éléments (14a, 14b) articulés autour d'un axe (15), l'élément inférieur (14a) étant relié à son extrémité inférieure à une tringle de commande (20) montée pour coulisser le long du longeron inférieur (12), et l'extrémité supérieure de l'élément supérieur (14b) étant munie d'un clapet (21) coulissant le long d'une tige de commande (22) qui s'étend parallèlement au longeron supérieur (11).

2. Cornadis suivant la revendication 1, caractérisé en ce que la tige de commande (22) porte un arrêt (23) escamotable entre une position qui peut bloquer le clapet (21) et une position qui dégage le clapet (21).

3. Cornadis suivant la revendication 1 ou 2, caractérisé en ce qu'il comporte une butée (24) pour bloquer le mécanisme lorsque l'élément inférieur (14a) se trouve en position inclinée.

## Patentansprüche

1. Füttereinrichtung, die von einem Portalrahmen gebildet ist, der obere und untere Längsträger und Pfosten besitzt, die nebeneinander angeordnete Öffnungen (10) begrenzen, wobei die Ebene jeder Öffnung einen Schwinghebel enthält, der an einem Träger angehängt ist, dadurch gekennzeichnet, daß jede Schwinghebel zwei Elemente (14a, 14b) besitzt, die an einer Achse (15) angelenkt sind, wobei das untere Element (14a) mit seinem unteren Ende mit einem Steuergestänge (20) verbunden ist, das dem unteren Langsträger (10) entlang gleitend angebracht ist, und wobei das obere Ende des oberen Elements (14b) mit einem Einrastorgan (21) versehen ist, das entlang einer Steuerstange (22), die sich parallel zum oberen Längsträger (11) erstreckt, gleitet.

2. Füttereinrichtung nach Anspruch 1, dadurch gekennzeichnet, daß die Steuerstange (22) ein Stoppelement (23) trägt, das zwischen einer Stellung, die das Rastorgan (21) blockieren kann und einer Stellung, die das Rastorgan (21) freigibt, bewegbar ist.

3. Füttereinrichtung nach Anspruch 1 oder 2, dadurch gekennzeichnet, daß sie einen Anschlag (24) zur Blockierung der Vorrichtung besitzt, wenn das untere Element (14a) sich in geneigter Stellung befindet.

## Claims

1. Feeding fence comprising a portico including upper and lower beams and posts which define juxtaposed openings, the plane of each opening including a swivel device suspended to a support, wherein each swivel device is formed by two elements hingedly mounted about an axis, the lower element being connected at its lower end to a control rod mounted in a way to extend along the lower beam and the upper end of the upper element being provided with a locking member sliding along a control rod extending in a parallel relationship to the upper beam.

2. Feeding fence according to claim 1, wherein the control rod extending in parallel relationship to the upper beam carries a stop retractable between a locking member locking position and a locking member releasing position.

3. Feeding fence according to claim 1, comprising an abutment for locking the fence when the lower swivel element is in its inclined position.
